# EUROPEAN PATENT APPLICATION

(11) **EP 4 481 284 A1**
(43) Date of publication of application: **25.12.2024**
(21) Application number: 23180107.7
(22) Date of filing: 19.06.2023
(51) Int. Cl.: F24D 19/10, F24H 15/215, F24H 15/219, F24H 15/315, F24H 15/414, F24H 15/429, G05D 23/13

(54) **UNDERFLOOR HEATING DIVERTER/BLENDING VALVE**

(71) Applicant: Pittway Sarl, 1180 Rolle (CH)
(72) Inventor: HURST, Andrew, 1180 Rolle (CH); MEINICKE, Krzysztof, 1180 Rolle (CH)
(74) Representative: Murgitroyd & Company

(57) **Abstract**

A control system for a heating system, comprising a blending valve configured to be connected to a heat source and a heating circuit conduit. The blending valve is configured to mix a heating water supply with the return flow from the heating circuit and supply the mixed water to the heating circuit. The blending valve has a first temperature threshold corresponding to the desired operating temperature of the heating circuit and a second temperature threshold that is substantially lower than the return temperature. An actuator is provided the switches the blending valve to the first temperature threshold to activate the heating circuit and to the second temperature circuit to deactivate the heating circuit. The actuator is connected to the pump, and operates the pump when activating the heating circuit.

## Description

### FIELD OF THE INVENTION

The present invention relates to an underfloor heating system and a control system therefor.

### BACKGROUND OF THE INVENTION

Underfloor hearing systems generally comprise, among other components, a heat source, such as a boiler or other source of hot water), one or more pumps, and a control system. Especially when used in mixed systems, i.e. systems that use radiators as well as the underfloor systems, the boiler normally produces water which is too hot for the underfloor circuit. Therefore, the control system has to regulate the temperature of water that is input into the underfloor circuit. The control system usually comprises, among other components, water manifolds with integrated thermostatic radiator valve (TRV) heads which control the water temperature, combined with thermal actuators that control the flow of water through the heating circuit for room control.

These water manifolds are usually rather larger, complex and comparatively expensive, especially for applications where a single zone of underfloor heating is required. There is therefore a need for a simplified solution for controlling the flow and temperature of an underfloor heating system that simplifies reduces component cost and simplifies installation.

It is therefore desirable to provide an improved heating system for underfloor heating which addresses the above-described problems and/or which offers improvements generally.

### SUMMARY OF THE INVENTION

According to the present disclosure there is provided a heating control system as described in the accompanying claims.

In an aspect of the disclosure there is provide a heating control system, comprising a thermostatic mixing valve. The thermostatic mixing valve comprises a first inlet for receiving liquid at a first temperature; a second inlet for receiving liquid at a second temperature that is lower than the first temperature; an outlet configured to receive liquid from the first and second inlets and to supply an output flow at a supply temperature; a thermostatic element arranged to control the flow of liquid from the first inlet to the outlet to limit the supply temperature to a desired temperature threshold; and a temperature threshold control operative to vary the temperature threshold. The heating control system further comprises an actuator operatively connected to the thermostatic mixing valve. The actuator is configured to operate the temperature threshold control to switch the temperature threshold between a first temperature threshold corresponding to a desired supply temperature for a heating circuit that is lower than the first temperature and greater than or equal to the second temperature, and a second temperature threshold that is lower than the second temperature, such that when the temperature threshold control is set to the first temperature threshold the thermostatic mixing valve mixes flow from the first and second inlets to until the temperature of the outlet flow reaches the desired temperature threshold and when the temperature threshold control is set to the second temperature threshold the thermostatic mixing valve closes the first inlet.

The heating control system may further comprise a pump for circulating the outlet flow around a heating circuit, wherein the pump is operated in response to the actuator being activated to switch the temperature threshold control to the first temperature threshold.

The actuator may be operatively connected to the pump such that activation of the actuator to switch the temperature threshold control to the first temperature threshold also causes activation of the pump.

The thermostatic mixing valve may be a mechanical thermostatic mixing valve and wherein the thermostatic mixing valve does not comprise electronic components. The actuator may be a thermal actuator.

When the thermostatic mixing valve is set to the first temperature threshold it may be operative to open the first inlet if the supply temperature is below the first threshold to cause mixing of liquid from the first and second inlet, and to close the first inlet if the supply temperature reaches or exceeds the first temperature threshold.

The heating control system may further comprise a temperature controller operative to activate the actuator to switch the threshold temperature control to the first temperature threshold and operate the pump to active the heating system.

The heating control system may further comprise a temperature controller operative to activate the actuator to switch the threshold temperature control to the first temperature threshold and operate the pump to active the heating system, and to switch the temperature threshold control to the second temperature threshold to deactivate the heating system

In another aspect of the disclosure there is provided a heating system, comprising a heat source configured to provide liquid having a first temperature; a heating circuit; and a thermostatic mixing valve. The thermostatic mixing valve comprises a first inlet for receiving liquid from the heat source; a second inlet for receiving a return flow of liquid from the heating circuit at a second temperature that is lower than the first temperature; an outlet connected to the heating circuit and configured to receive liquid from the first and second inlets to supply an output flow to the heating circuit at a supply temperature; a thermostatic element arranged to control the flow of liquid from the first inlet to the outlet to limit the supply temperature to a desired temperature threshold; and a temperature threshold control operative to vary the temperature threshold. The system further comprises an actuator operatively connected to the thermostatic mixing valve. The actuator is configured to operate the temperature threshold control to switch the temperature threshold between a first temperature threshold corresponding to a desired supply temperature for a heating circuit that is lower than the first temperature and greater than or equal to the second temperature, and a second temperature threshold that is lower than the second temperature, such that when the temperature threshold control is set to the first temperature threshold the thermostatic mixing valve mixes flow from the first and second inlets to until the temperature of the outlet flow reaches the desired temperature threshold and when the temperature threshold control is set to the second temperature threshold the thermostatic mixing valve closes the first inlet.

The heating system may further comprise a pump arranged to receive liquid from the thermostatic mixing valve and to circulate that liquid around the heating circuit, wherein the pump is operated in response to the actuator being activated to switch the temperature threshold control to the first temperature threshold.

The heating circuit may be an underfloor heating circuit.

The actuator may be operatively connected to the pump such that activation of the actuator to switch the temperature threshold control to the first temperature threshold also causes activation of the pump

The heating system may further comprise a temperature controller configured to operate the actuator to activate the heating system, [add to SOI re user input and automation pre set controls].

The temperature controller may be configured to operate the actuator to switch the temperature threshold control to the first temperature threshold to activate the heating system and to switch the temperature threshold control to the second temperature threshold to deactivate the heating system.

The heating system may further comprise a second pump connected to the heat source.

The heating system may further comprise at least one radiator.

In another aspect of the disclosure there is provide a method of controlling a heating system, the heating system comprising: a heat source configured to provide liquid having a first temperature; a heating circuit; a thermostatic mixing valve comprising: a first inlet for receiving liquid from the heat source; a second inlet for receiving a return flow of liquid from the heating circuit at a second temperature that is lower than the first temperature; an outlet connected to the heating circuit and configured to receive liquid from the first and second inlets to supply an output flow to the heating circuit at a supply temperature; a thermostatic element arranged to control the flow of liquid from the first inlet to the outlet to limit the supply temperature to a desired temperature threshold; and a temperature threshold control operative to vary the temperature threshold. An actuator is operatively connected to the thermostatic mixing valve. The method comprises, in a first mode of operation in which heating is required, controlling the actuator to operate the temperature threshold control to switch the temperature threshold to a first temperature threshold corresponding to a desired supply temperature for the heating circuit that is lower than the first temperature and greater than or equal to the second temperature to cause the thermostatic mixing valve to mix flow from the first and second inlets until the temperature of the outlet flow reaches the desired temperature threshold, and in a second mode of operation in which heating is not required controlling the actuator to switch the temperature threshold to a second temperature threshold that is lower than the second temperature to cause the thermostatic mixing valve to close the first inlet.

The method may further comprise operating the pump in response to the actuator being controlled to switch the temperature threshold to the first temperature threshold to cause heating of the heating circuit.

### BRIEF DESCRIPTION OF THE DRAWINGS

Specific embodiments of the present invention will now be described, by way of example only, with reference to the accompanying drawings in which:

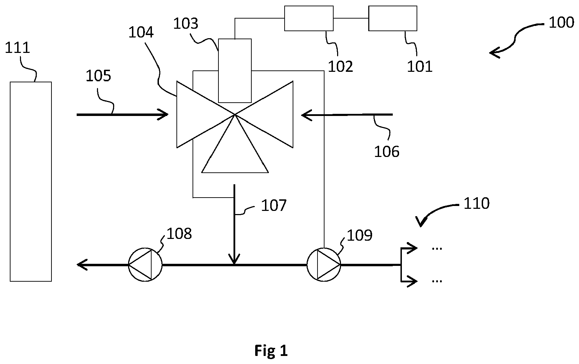

FIGURE 1 is a schematic view of an underfloor heating system.

### DETAILED DESCRIPTION

The following description presents exemplary embodiments and, together with the drawings, serves to explain principles of the disclosure. The scope of the disclosure is not intended to be limited to the precise details of the embodiments or exact adherence with all method steps. Variations will be apparent to a skilled person and are deemed also to be covered by the description. Terms for features used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" are relative terms that may be used for convenience of explanation usually with reference to the illustrations and are not intended to be ultimately limiting if an equivalent function can be achieved with an alternative dimension and/or direction.

The description herein refers to embodiments with particular combinations of configuration steps or features. However, it is envisaged that further combinations and cross-combinations of compatible steps or features between embodiments will be possible. The description of multiple features in relation to any specific embodiment is not an indication that such features are inextricably linked, and isolated features may function independently from other features and not necessarily require implementation as a complete combination.

The below description is for illustration only, and is not intended to be limiting. Various elements of embodiments described below may be combined into new embodiments not explicitly described herein, as appropriate.

Referring to Fig 1, a schematic view of an underfloor heating system 100 and a control system therefor. In the described embodiment, the underfloor heating system 100 comprises a room temperature control 101, a diverter 102, an actuator 103, a thermostatic mixing valve (otherwise known as a "blending valve") 104, a first pump 109, a second pump 108, an underfloor circuit 110 and a heat source 111. The underfloor heating system 100 may be used as part of the heating system of a residential building or a part of a larger, more complex system, such as a commercial building. The heating system may for example be used in a house comprising several rooms, one or more of which may be heated by underfloor heating, and the building may also include one or more radiators, and the like. Some parts of the building heating system, such as the radiators, may operate at a higher water temperature than the underfloor emitters. The heating system 100 may also heat separate defined zones within the same room.

The heating system includes a heat source 111, which may for example be a boiler, such as a gas boiler generating heat with gas combustion to heat a water source. Other embodiments of a heat source 111 are possible.

A temperature control 101 is provided, which may automatically control the room temperature. The temperature control 101 may include a user interface to turn the heating on / off, set up heating boosts, set the required room temperature and other similar functions. The temperature control 101 may be further provided with one or more sensors (not shown) to sense the room temperature and operate the heating system 100 in accordance with a preset target temperature and the actual temperature in the respective room or rooms.

The blending valve 104 is a mechanical blending valve. The blending valve 104 may comprise a thermally reactive element such as wax thermostatic element with a water temperature controller. The temperature controller is preferable a mechanically adjustable controller. The blending valve 104 includes a first inlet 105 for receiving hot water, a second inlet 106 for receiving cooler water, which in the present case is the return water from the underfloor heating circuit, and a supply outlet 107. The thermostatic element is thermally reactive to the temperature of the water at the supply outlet 107. The thermostatic element controls open and closing of the first inlet 105 to prevent or allow flow of hot water to the supply outlet 107 of the valve 104. In a first operating condition, with the first inlet 105 closed by the thermostatic element, the water exiting the supply outlet 107 is the return water from the second inlet 106 only. In a second operating condition, with the first inlet 105 open, the water exiting the supply outlet 107 is a mix of the hot water and return water from the first and second inlets 105,106 respectively. The temperature controller is adjustable to vary the temperature threshold of the thermostatic element. That is to say, adjustment of the temperature controller varies the threshold temperature at which the thermostatic element closes the first inlet 105 to prevent further heating.

In a typical heating system of the prior art, the blending valve 104 is an independent mechanical valve provided for the sole purpose of limiting water temperature to a predefined threshold. Blending valves are not provided with any electronic components such as thermostats or electronically operated actuators. Flow control through the system requires separated flow control elements such as thermally regulated valves. provided without any other control mechanism.

The blending valve 104 is connected to the heat source 111. The heat source 111 may be a boiler or other heating mechanism producing a first water supply that is connected to the first inlet 105 and having a first temperature. The first water supply from the heat source 111 is the "hot water" supply. The return flow from the underfloor heating circuit defines a second second source of water that is connected to the second inlet 106 and having a second temperature. The second water source from the return flow is the "cooler water". The first temperature may be above 55 °C, for example around 60 °C, 75 °C or 90 °C. The second temperature is lower than the first temperature. The second temperature may be below 30 °C, for example between 15-25 °C. The blending valve 104 is configured to mix the first water supply 105 having the first temperature ("hot water") with the second water supply 106 having the second temperature ("return/cold water") to achieve a desired water supply temperature. The supply temperature is lower than the first temperature and equal to or higher than the second temperature.

The underfloor heating circuit 110 is designed to operate with water at the supply temperature, which is lower than the first temperature. It is important to maintain the water in the heating circuit at or below the predetermined supply temperature to prevent injury to the occupant and/or damage to the heating system or the flooring. The threshold supply temperature may be below 50 °C, and typically will be approximately 35 °C. The blending valve 104 is therefore configured in a first setting to output water at the supply temperature.

The underfloor heating system 100 further comprises a first pump 109 and a second pump 108. The second pump 108 may be controlled by the heat source. The heat source 111 itself may be controlled by the temperature control 101. The second pump 108 supplies water to the heat source 111 to produce the first water supply 105 having the first temperature. The first water supply 105 having the first temperature is then input into the valve 104, as indicated by arrow 105, where it is mixed with the second water supply 106 having the second temperature, with the valve 104 outputting water having the third temperature. In mixed systems, i.e. systems where one or more radiators are used alongside one or more underfloor circuits, the first pump 109 may be the pump controlling the water flow through the whole house/building heating system.

The first pump 109 is arranged to circulate water through the underfloor heating circuit 110. The first pump 109 is therefore only required to operate when heating is required. In the underfloor heating circuit 110, water is supplied by the first pump 109 at the supply temperature. As the water passes through the heating circuit it gradually cools to the second temperature and is then resupplied into the second inlet 106 of the valve 104 where it is mixed with water supplied by the heat source 111 to the first inlet 105.

The actuator 103 may be a part of the blending valve 104. That is to say they may form part of a single integrate component. Where the actuator 103 is part of the valve 104, the valve 104 and the actuator 103 may be housed in a single housing (not shown). The actuator 103 may be removable from the valve 104. The actuator 103 may alternatively be separate from, but operatively coupled with the valve 104.

The actuator 103 may be for example a thermal actuator. The actuator 103 may be an electric actuator and may include an electric heating element arranged to heat a thermally expansive material within the actuator 103 to operate an actuating element such a push rod or actuating pin. The actuator 103 is electrically and operatively connected to the first pump 109, with the power supply for the first pump 109 being provided via the actuator 103. The actuator 103 is arranged to operate the temperature controller of the blender valve 104. The actuator 103 is arranged such that, when activated, the actuating element is moved to operate and adjust the temperature controller to change the threshold temperature. The temperature controller may include at least two temperature settings. The first temperature setting is a temperature selected to be significantly lower than the return temperature (e.g. 5°C). The second setting is set to correspond to the predetermined supply temperature (e.g. 35°C).

The default setting of the valve 104 is the first setting. As the temperature in the second setting is below the return temperature, the temperature threshold is met and the valve 104 keeps the first inlet 105 closed to prevent any additional heating. The actuator 103, when activated, is energised to operate the temperature control of the valve 104 and move it to the second setting, which increased the temperature threshold to the supply temperature. If the supply outlet temperature is not at the threshold temperature, the valve 104 opens the first inlet to allow the flow of hot water into the valve 104, to mix with the return water. The actuator therefore functions as an on/off switch for the blender valve. That is to say, in the first setting the threshold is so low that the valve is always off (i,e. the first outlet is closed) as the threshold is never met. Moving the temperature control; to the second setting increases the threshold and turns the valve on i.e. allows it to open the first inlet 105. The actuator 103 thereby enables the blending valve to function as a temperature regulator in the second setting, and a flow controller in the first setting by preventing flow from the heat source 111.

The actuator 103 is further configured to function as a switch for the first pump 109. The first pump 109 is required to circulate water through the underfloor heating circuit 110 when heating is required. At all other times the pump 109 is not required and is deactivated. The actuator 103 is operatively connected to the first pump 109 such that when the actuator 103 is activated to move the thermal control to the second position, the first pump 109 is simultaneously turned on. As such, the blender valve 104 is turned on at the same time as the first pump 109, such that the blender valve 104 begins to allow mixing to heat the supply outlet water at the same time as the first pump 109 starts to circulate water through the underfloor heating circuit 110. Similarly, when the actuator 103 is deactivated to switch the valve 104 to the first position (off), the first pump 109 is also turned off by the actuator 103. So the first pump 109 is operated (activated or deactivated, switched on/off) by the actuator 103. The actuator 103 activates or deactivates the first pump 109 based on a signal from the room temperature controller 101.

In an embodiment the actuator 103 has an electrical contact switch that is operated to activate the actuator in response to a signal from the room controller 101. The electrical contact switch also opens and closes the power supply to the first pump 109. As such, when the switch is closed to operate the actuator 103, it also closes the power circuit for the first pump 109, thereby causing operation of the first pump 109.

Operation of the underfloor heating system 100 is controlled by the room controller 101. When heating is required, which may be due to the room temperature falling below a predetermined threshold and/or a predetermined schedule, and/or due to user input, the room controller 101 activates the actuator 103. The actuator 103 operates the blender valve to the second setting, and simultaneously operates the first pump 109 to cause flow through the underfloor heating circuit 110. The supply temperature of water is set by the temperature control of the blender valve 104, which raises the supply pressure to the desired threshold temperature (e.g. 35°C). Water having a temperature suitable for the underfloor circuit 110) is thereby output by the valve 104 to the underfloor heating circuit 110.

The actuator 103 may contain an electric element that heats a thermally expansive material' such as a wax filler, causing it to expand and push out a pin out and to retract the pin when the material cools and contracts. As well as controlling operation of the valve 104, the actuator 103 operates an internal electrical contact that operates the first pump 109. Consequently, when the actuator 103 is operated the first pump 109 is activated, and water is circulated through the underfloor circuit 110. When heating of the room is no longer required, the controller 101 regulates the flow of water from the heat source 111 to the valve 104 and/or the output of water from the valve 104, the actuator 103 is de-energised and the first pump 109 is deactivated.

The arrangement of the present disclosure, in which an actuator 103, being a thermal actuator, is used to operate a simple mechanical blender valve 104 is advantageous in that it is a simplification of the existing systems, and allows for reducing costs and simplification of installation, servicing or replacement of the system 100 and/or the valve 104 and the actuator 103.

The above-described is especially suitable for systems where a room in which the underfloor circuit 110 is located is a single zone.

An example with only a single valve 104, a single underfloor circuit 110 and a single first pump 109 is described above. It will be understood that a heating system may comprise more than one of each of those components. For example, each of a plurality of rooms or zones with said rooms may be equipped with a valve 104, an underfloor circuit 110 and a first pump 109. While the above embodiment is described using water as heating medium, it is not limited to this medium and any suitable thermally conductive fluid may be utilised.

## Claims

**1.** A heating control system, comprising:
a thermostatic mixing valve comprising:
a first inlet for receiving liquid at a first temperature;
a second inlet for receiving liquid at a second temperature that is lower than the first temperature;
an outlet configured to receive liquid from the first and second inlets and to supply an output flow at a supply temperature;
a thermostatic element arranged to control the flow of liquid from the first inlet to the outlet to limit the supply temperature to a desired temperature threshold; and
a temperature threshold control operative to vary the temperature threshold; and
an actuator operatively connected to the thermostatic mixing valve ;
wherein the actuator is configured to operate the temperature threshold control to switch the temperature threshold between a first temperature threshold corresponding to a desired supply temperature for a heating circuit that is lower than the first temperature and greater than or equal to the second temperature, and a second temperature threshold that is lower than the second temperature, such that when the temperature threshold control is set to the first temperature threshold the thermostatic mixing valve mixes flow from the first and second inlets to until the temperature of the outlet flow reaches the desired temperature threshold and when the temperature threshold control is set to the second temperature threshold the thermostatic mixing valve closes the first inlet.

**2.** A heating control system according to claim 1 further comprising a pump for circulating the outlet flow around a heating circuit, wherein the pump is operated in response to the actuator being activated to switch the temperature threshold control to the first temperature threshold.

**3.** A heating control system according to claim wherein the actuator is operatively connected to the pump such that activation of the actuator to switch the temperature threshold control to the first temperature threshold also causes activation of the pump.

**4.** A heating control system according to any preceding claim 1, wherein the thermostatic mixing valve is a mechanical thermostatic mixing valve and wherein the thermostatic mixing valve does not comprise electronic components.

**3.** A heating control system according to claim 1 or claim 2, wherein the actuator is a thermal actuator.

**4.** A heating control system according to any one of the preceding claims, wherein when the thermostatic mixing valve is set to the first temperature threshold it is operative to open the first inlet if the supply temperature is below the first threshold to cause mixing of liquid from the first and second inlet, and to close the first inlet if the supply temperature reaches or exceeds the first temperature threshold.

**5.** A heating control system according to any preceding claim, further comprising a temperature controller operative to activate the actuator to switch the threshold temperature control to the first temperature threshold and operate the pump to active the heating system.

**6.** A heating control system according to claim 5, further comprising a temperature controller operative to activate the actuator to switch the threshold temperature control to the first temperature threshold and operate the pump to active the heating system, and to switch the temperature threshold control to the second temperature threshold to deactivate the heating system

**7.** A heating system, comprising:
a heat source configured to provide liquid having a first temperature;
a heating circuit;
a thermostatic mixing valve comprising:
a first inlet for receiving liquid from the heat source;
a second inlet for receiving a return flow of liquid from the heating circuit at a second temperature that is lower than the first temperature;
an outlet connected to the heating circuit and configured to receive liquid from the first and second inlets to supply an output flow to the heating circuit at a supply temperature;
a thermostatic element arranged to control the flow of liquid from the first inlet to the outlet to limit the supply temperature to a desired temperature threshold; and
a temperature threshold control operative to vary the temperature threshold; and
an actuator operatively connected to the thermostatic mixing valve ;
wherein the actuator is configured to operate the temperature threshold control to switch the temperature threshold between a first temperature threshold corresponding to a desired supply temperature for a heating circuit that is lower than the first temperature and greater than or equal to the second temperature, and a second temperature threshold that is lower than the second temperature, such that when the temperature threshold control is set to the first temperature threshold the thermostatic mixing valve mixes flow from the first and second inlets to until the temperature of the outlet flow reaches the desired temperature threshold and when the temperature threshold control is set to the second temperature threshold the thermostatic mixing valve closes the first inlet.

**8.** A heating system according to claim 6 further comprising a pump arranged to receive liquid from the thermostatic mixing valve and to circulate that liquid around the heating circuit, wherein the pump is operated in response to the actuator being activated to switch the temperature threshold control to the first temperature threshold.

**9.** A heating system according to claim 7 or 8 wherein the heating circuit is an underfloor heating circuit.

**10.** A heating system according to any one of claims 6 to 8 wherein the actuator is operatively connected to the pump such that activation of the actuator to switch the temperature threshold control to the first temperature threshold also causes activation of the pump

**11.** A heating system according to any one of claims 7 to 10, further comprising a temperature controller configured to operate the actuator to activate the heating system. [add to SOI re user input and automation pre set controls].

**12.** A heating system according to claim 11 wherein the temperature controller is configured to operate the actuator to switch the temperature threshold control to the first temperature threshold to activate the heating system and to switch the temperature threshold control to the second temperature threshold to deactivate the heating system.

**13.** A heating system according to claim 6 or claim 7, further comprising a second pump connected to the heat source.

**14.** A method of controlling a heating system, the heating system comprising:
a heat source configured to provide liquid having a first temperature;
a heating circuit;
a thermostatic mixing valve comprising:
a first inlet for receiving liquid from the heat source;
a second inlet for receiving a return flow of liquid from the heating circuit at a second temperature that is lower than the first temperature;
an outlet connected to the heating circuit and configured to receive liquid from the first and second inlets to supply an output flow to the heating circuit at a supply temperature;
a thermostatic element arranged to control the flow of liquid from the first inlet to the outlet to limit the supply temperature to a desired temperature threshold; and
a temperature threshold control operative to vary the temperature threshold; and
an actuator operatively connected to the thermostatic mixing valve;
in a first mode of operation in which heating is required, controlling the actuator to operate the temperature threshold control to switch the temperature threshold to a first temperature threshold corresponding to a desired supply temperature for the heating circuit that is lower than the first temperature and greater than or equal to the second temperature to cause the thermostatic mixing valve to mix flow from the first and second inlets until the temperature of the outlet flow reaches the desired temperature threshold, and in a second mode of operation in which heating is not required controlling the actuator to switch the temperature threshold to a second temperature threshold that is lower than the second temperature to cause the thermostatic mixing valve to close the first inlet.

**15.** The method of claim 14, further comprising operating the pump in response to the actuator being controlled to switch the temperature threshold to the first temperature threshold to cause heating of the heating circuit.
